# EUROPEAN PATENT SPECIFICATION

(11) **EP 1 232 413 B1**
(45) Date of publication and mention of the grant of the patent: **30.07.2003**
(21) Application number: 00977027.2
(22) Date of filing: 07.11.2000
(51) Int. Cl.: G02F 1/09

(54) **OPTICAL CIRCUIT ELEMENT AND METHOD OF PRODUCING THE SAME**
OPTISCHES SCHALTKREISELEMENT UND DESSEN HERSTELLUNGSVERFAHREN
ELEMENT DE CIRCUIT OPTIQUE ET PROCEDE DE FABRICATION CORRESPONDANT

(30) Priority: 26.11.1999 JP 33569999
(43) Date of publication of application: 21.08.2002
(73) Proprietor: 3M Innovative Properties Company, Saint Paul, MN 55133-3427 (US); NEC TOKIN Corporation, Sendai-shi, Miyagi (JP)
(72) Inventor: HONMA, Yoh, Shiroi-city, Miyagi 989-0223 (JP); HASHIMA, Manabu, Shiroi, Miyagi 989-0223 (JP); TAKAHASHI, Tatsuo, Tokyo 194-0013 (JP)
(74) Representative: Hilleringmann, Jochen, Dipl.-Ing.
(86) International application number: US0030609
(87) International publication number: WO01038930

(56) References cited:
- EP-A- 0 381 117
- WO-A-95/17691
- US-A- 4 272 159

## Description

### BACKGROUND OF THE INVENTION

The present invention relates to an optical circuit element and to a method of producing the same. More specifically, the invention relates to an optical circuit element that can be advantageously used as an optical passive part in optical communication equipment and in optical data equipment for rearranging the passages of optical signals. Representative examples of the optical circuit element include optical circulator, optical switch, optical isolator and the like.

In modern optical communication systems, widespread use of optical fiber amplifiers is demanding more optical circuit elements such as optical circulators and optical switches for rearranging the passages of optical signals. In the wavelength multiple division optical communication systems that are drawing attention in recent years, furthermore, it is expected that a structure of a combination of a narrow-band optical filter and an optical circulator will be required in large quantities. It is therefore considered that the optical circulator will play a very important role in the development of optical communication systems in the future and the demand for it will further increase.

The optical circulator is an optical gyrator (optical circuit element exhibiting non-reciprocal property), and has three or more ports or terminals therein. For example, when the optical circulator has four ports A, B, C and D, the optical signal is allowed to pass in the directions of A → B, B → C, C → D and D → A, but is not allowed to pass in the reverse direction.

The optical circulators can be divided into those of two kinds of structures, i.e., the one of the type dependent on the polarization that corresponds to the case where the incident beam is linearly polarized and the one of the type independent of the polarization, which is not dependent on the polarizing state of the incident beam. Between them, the optical circulator of the type independent of the polarization has a feature in that light transmitting through the optical circulator is attenuated little. That is, a light beam incident on this optical circulator is once isolated into two polarized beams in the element, and the separated beams are synthesized again. Therefore, there does not occur loss of light except those caused by reflection when light passes through the element and unavoidable attenuation caused by scattering, etc.

The optical circulators of the type independent of the polarization can be divided into those of several types. Among them, a typical optical circulator is the one which has four terminals yet is made in the type independent of the polarization as disclosed in Japanese Unexamined Patent Publication (Kokai) No. 55-93120. Japanese Unexamined Patent Publication (Kokai) No. 55-93120 illustrates in its Fig. 1 an optical circulator 60 having two polarized light-separating prisms (polarized beam splitter, generally called "PBS") 65 and 66 formed of a multi-layer dielectric film, two totally reflecting mirrors 67 and 68 formed of a multi-layer dielectric film, a piece of Faraday rotor 75, a piece of 45-degree flashing element 76. and a magnetic field application means (not shown). Here, the Faraday rotor is capable of rotating the polarizing plane by 45 degrees upon the application of a magnetic field and is composed of a magnetic garnet, the 45-degree flashing element is a one-half wavelength plate, and the multi-layer dielectric film constituting the polarized light-separating prisms and the totally reflecting mirrors is formed by alternatingly laminating dielectric films having different refractive indexes one upon the other maintaining predetermined film thicknesses.

In the illustrated circulator 60, transmission light incident on a first light incident/outgoing port 61 is polarized, separated and synthesized on its way to arrive at a second light incident/outgoing port 62. That is, transmission light incident on the first light incident/outgoing port 61 is separated into two polarized components at right angles with each other as it passes through the polarized light-separating prism 65. The separated light components pass through different passages in the optical circulator and are synthesized together through another polarized light-separating prism 66. The polarized and separated light components are synthesized together, and the thus synthesized beam goes out from the second light incident/outgoing port 62. Transmission light incident on the second light incident/outgoing port 62 reaches a third light incident/outgoing port 63 passing through a passage similar to that through which transmission light incident on the first light incident/outgoing port 61 travels. Similarly, transmission light incident on the third light incident/outgoing port 63 reaches a fourth light incident/outgoing port 64, and transmission light incident on the fourth light incident/outgoing port 64 reaches the first light incident/outgoing port 61. In the diagramed optical circulator 60 as described above, the polarized components separated in the optical circulator are synthesized again, and the synthesized beam goes out from the same incident/outgoing port.

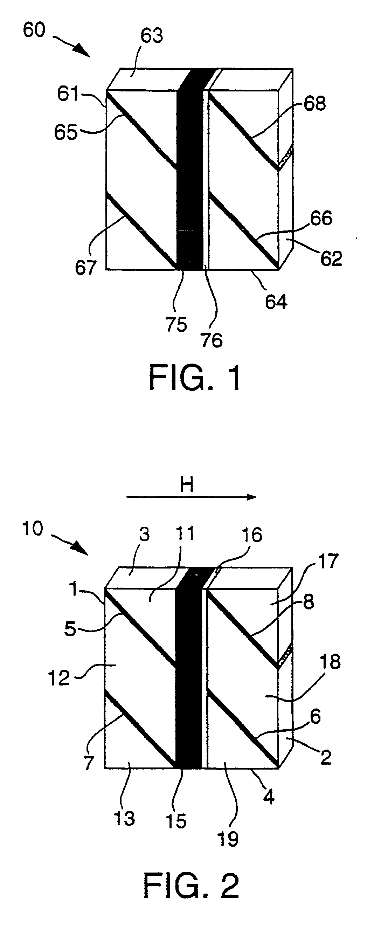

In the optical circulator of a general structure, furthermore, the direction of a magnetic field applied to the Faraday rotor is changed to change the port from which the transmission light goes out. Therefore, the optical circulator can be modified into the form of an optical switch. In the case of the optical circulator 60 described with reference to Fig. 1, for example, a device capable of changing the direction of the application of a magnetic field such as an electromagnet may be used instead of a permanent magnet that has generally been used or a device having a fixed direction of application of magnetic field, in order to provide an optical switch. In the thus obtained optical switch though not diagramed, the passage of transmission of light which, in the case of the optical circulator 60, is from the first light incident/outgoing port 61 → second light incident/outgoing port 62, can be changed to from the first light incident/outgoing port 61 → fourth light incident/outgoing port 64 by reversing the direction of application of magnetic field. As described above, it is also possible to realize an optical switch by directly utilizing the constitution of the optical circulator.

In the optical circulator of the type independent of the polarization described above with reference to Fig. I and in any other conventional optical circulator of the type independent of the polarization, the polarized light-separating prisms and the totally reflecting mirrors are formed of a multi-layer film obtained by alternatingly laminating dielectric films having different refractive indexes one upon the other maintaining predetermined thicknesses. From the standpoint of both light transmission property and reflection property, however, this multi-layer dielectric film is inferior, in regard to the extinction ratio, to various types of polarizers that have been generally used in the optical circulators, and tends to deteriorate performance of the circulator. In practice, the multi-layer dielectric film exhibits an extinction ratio of about 25 dB which is smaller than that of the magnetic garnet that is, generally, used as a part for constituting the optical circulator.

The multi-layer dielectric film not only requires expensive starting materials but also requires complex steps of production such as steps of cutting, polishing, etc., and becomes inevitably expensive. In practice, about 30 to 50% of the cost for producing the conventional optical circulators has been occupied by the cost of producing polarizers,

JP-A-55 093120 does not contain a limitation to "films made of a polymer", as expressly recited in the characterising portion of Claim 1, but it contains a prior disclosure of an "optical circuit element", which includes all the other features of this claim.

WO-A-95 17691, contains a prior disclosure of "films made of a polymer", that work as a reflection type polarising film, but these films were not used in an "optical circuit element". Instead, WO-A-95 17691 describes the use for glare reducing sunglasses and in Liquid Crystal Displays.

### SUMMARY OF THE INVENTION

The present invention addresses the above-mentioned problems and provides an optical circuit element which features high performance, is easy to produce, and may be produced at a reduced cost.

The present invention provides an optical circuit element useful as an optical circulator, an optical switch or an optical isolator.

The present invention also provides a useful method of producing optical circuit elements.

According to one aspect of the present invention, there is provided an optical circuit clement comprising, in combination, two polarized light-separating elements, two totally reflecting mirrors, at least a piece of polarizing plane rotating element independent of a direction of travel of light, at least a piece of polarizing plane rotating element dependent of a direction of travel of light, a plurality of light incident/outgoing ports, and a magnetic field application means; wherein,
said polarized light-separating elements and said totally reflecting mirrors are formed of the same or different multi-layer polymer films.

According to another aspect of the present invention, there is provided a method of producing optical circuit elements comprising, in combination, two polarized light-separating elements, two totally reflecting mirrors, at least a piece of polarizing plane rotating element independent of a direction of travel of light, at least a piece of polarizing plane rotating element dependent of a direction of travel of light, a plurality of light incident/outgoing ports, and a magnetic field application means; wherein,
said polarized light-separating elements and said totally reflecting mirrors are formed of the same or different multi-layer polymer films;
one of said polarized light-separating elements and one of said totally reflecting mirrors are opposed to each other via a glass plate interposed therebetween, and are coupled integrally together nearly in parallel with each other;
the obtained integrated optical member is so cut that the cut surfaces maintain an angle of nearly 45 degrees with respect to the surfaces of said polarized light-separating elements and to the surfaces of said totally reflecting mirrors; and
the integrated optical member after cut is combined together with said polarizing plane rotating element independent of the direction of travel of light and said polarizing plane rotating element dependent of the direction of travel of light, thereby to form an integrated optical part.

### BRIEF DESCRIPTION OF THE DRAWINGS

Fig. 1 is a perspective view illustrating a conventional optical circulator.
Fig. 2 is a perspective view illustrating an Example of an optical circulator according to the present invention.
Fig. 3 is a side view illustrating a passage of transmission light from a first light incident/outgoing port to a second light incident/outgoing port in the optical circulator of Fig. 2.
Fig. 4 is a side view illustrating a passage of transmission light from the second light incident/outgoing port to a third light incident/outgoing port in the optical circulator of Fig. 2.
Fig. 5 is a side view illustrating a passage of transmission light from a third light incident/outgoing port to a fourth light incident/outgoing port in the optical circulator of Fig. 2.
Fig. 6 is a side view illustrating a passage of transmission light from the fourth light incident/outgoing port to the first light incident/outgoing port in the optical circulator of Fig. 2.
Fig. 7 is a perspective view illustrating another preferred Example of the optical circulator according to the present invention.
Fig. 8 is a perspective view illustrating a preferred Example of an optical switch according to the present invention.
Fig. 9 is a perspective view illustrating another preferred Example of the optical switch according to the present invention.
Fig. 10 is a perspective view of an integrated optical member used for the production of the optical circulator of Fig. 2.
Fig. 11 is a perspective view illustrating a step for cutting the integrated optical member of Fig. 10.
Fig. 12 is a perspective view illustrating a step of cutting for forming a precursor for the integrated optical part following the cutting step of Fig. 11.
Fig. 13 is a side view illustrating the outline of the integrated optical part produced through the cutting step of Fig. 12.
Fig. 14 is a side view illustrating a step of further cutting the integrated optical part of Fig. 13.
Fig. 15 is a side view illustrating the outline of the integrated optical part produced through the cutting step of Fig. 14.
Fig. 16 is a side view illustrating a step of producing the optical circulator of Fig. 2.
Fig. 17 is a side view illustrating a step of cutting following the step of Fig. 16.
Fig. 18 is a perspective view illustrating a precursor for the optical circulator produced through the cutting step of Fig. 17.
Fig. 19 is a perspective view illustrating a step of cutting the precursor for the optical circulator of Fig. 18.
Fig. 20 is a side view illustrating another preferred Example of the optical circulator according to the present invention.
Fig. 21 is a side view illustrating a modified Example of the optical circulator shown in Fig. 20.

### DETAILED DESCRIPTION OF THE INVENTION

The optical circuit element according to the present invention comprises, in combination, two polarized light-separating elements, two totally reflecting mirrors, at least a piece of polarizing plane rotating element independent of a direction of travel of light, at least a piece of polarizing plane rotating element dependent of a direction of travel of light, a plurality of light incident/outgoing ports, and a magnetic field application means. The optical circuit element of the invention can be constituted in various ways so far as the above-mentioned constituent requirements and the constituent requirements essential for the invention are satisfied, i.e., the polarized light-separating elements and the totally reflecting mirrors are formed of the same or different multi-layer polymer films, and can further be realized in various forms depending upon the constitution thereof and the kind of the magnetic field application means incorporated therein. Desirably, the optical circuit element of the present invention can be realized in the form of an optical circulator, optical switch or optical isolator. In the optical circuit element of the present invention, two polarized light-separating elements, two totally reflecting mirrors, at least a piece of polarizing plane rotating element independent of a direction of travel of light, at least a piece of polarizing plane rotating element dependent of a direction of travel of light, a plurality of light incident/outgoing ports, and a magnetic field application means, can be used in various combinations depending upon a field in which the optical circuit element is used and the desired effects. In particular, it is desired that one of the polarized light-separating elements and one of the totally reflecting mirrors are opposed to each other via a glass plate interposed therebetween, and are coupled integrally together nearly in parallel with each other.

In the practice of the present invention, it is desired that the light incident/outgoing ports are each constituted by a parallel light beam system of a nonspherical lens and an optical fiber as is generally employed in this field of technology. In the parallel light beam system, the incident/outgoing light beam having a diameter as large as possible is advantageous from the standpoint of preventing the constituent element from being optically damaged.

The polarizing plane rotating element independent of the direction of travel of light (hereinafter also referred to as "first polarizing plane rotating element ") is desirably a Faraday rotor. A suitable Faraday rotor will be a 45-degree Faraday rotor capable of rotating the polarizing plane by 45 degrees when a magnetic field is applied thereto. The 45-degree Faraday rotor may be constituted in a manner generally accepted in this field of technology, and is desirably made of a thick film of a Bi-substituted garnet such as GdBiFe garnet. More desirably, the first polarizing plane rotating element is a Faraday rotor composed of a magnetic garnet having a square hysteresis curve. The magnetic garnet suited for forming the Faraday rotor will be, for example, a Bi-substituted rare earth Fe garnet and, preferably. EuHoBiFeGaO or the like. Use of the above magnetic garnet makes it possible to maintain a magnetization of about 3500 Oe after it is magnetized and even after an external magnetic field is no longer applied. This makes it possible to eliminate the use of means for applying a magnetic field, such as magnet, and gives advantages from the standpoint of both structure and cost of production.

In the optical circuit element of the present invention, there is no particular limitation on the means for applying a magnetic field to the above-mentioned first polarizing plane rotating element. Generally, however, there can be advantageously used a magnet, an electromagnet or a coil.

Furthermore, in the practice of the present invention, the polarizing plane rotating element dependent on the direction of travel of light (hereinafter also referred to as "second polarizing plane rotating element") used simultaneously with the above-mentioned first polarizing plane rotating element, is desirably a one-half wavelength plate. The one-half wavelength plate is the one that is usually used in this field of technology, such as a quartz crystal one-half wavelength plate.

The polarized light-separating elements and the totally reflecting mirrors are formed of a multi-layer polymer film. That is, either the polarized light-separating elements or the totally reflecting mirrors are dielectric reflection optical elements made of a multi-layer polymer film. and are. desirably, used in the form of a dielectric reflecting film. Moreover, the multi-layer polymer film used for carrying out the present invention may be the one formed of the same kind of polymer commonly for the polarized light-separating elements and the totally reflecting mirrors, or may be the multi-layer polymer films formed of different polymers for each of the elements.

The reflection-type or reflective dielectric reflecting film suitably used for carrying out the present invention is a multi-layer optical film disclosed in Japanese National Publication (Kohyo) No. 9-507308 and in WO-A-95/17695. As disclosed therein, this multi-layer film is prepared by alternatingly laminating two kinds of different polymers A and B. That is, the obtained multi-layer film has the form of a multi-layer polymer film obtained by laminating the films in the order of --- ABAB ---. The multi-layer film is drawn along an axis (X-axis) at a drawing ratio of about 5:1, but is not drawn along another axis (Y-axis at right angles with the X-axis) and is, hence, drawn at a drawing ratio of substantially 1:1 along the Y-axis. In this specification, the X-axis is referred to as "drawing direction" and the Y-axis is referred to as "transverse direction".

In preparing a dielectric reflecting film which is a multi-layer film as described above, in general, the one polymer B has an apparent refractive index (e.g., 1.64) which does not substantially change through the drawing process or, in other words, has an optically isotropic property. The other polymer A exhibits a refractive index that changes through the drawing process. For example, a monoaxially drawn sheet of the polymer A has a first refractive index (e.g., 1.88) in the drawing direction and has a second refractive index (e.g., 1.64) in the transverse direction.

In the multi-layer polymer film (--- ABAB ---), the refractive index related to the in-plane axis (in parallel with the surface of the film) is defined to be an effective refractive index with respect to an incident beam that is plane-polarized, and the polarizing plane is in parallel with the above in-plane axis. After drawn, therefore, the multi-layer film (--- ABAB ---) exhibits a large difference among the inter-layer refractive indexes (1.88 to 1.64) in the drawing direction but substantially the same inter-layer refractive index in the transverse direction. Therefore, the multi-layer film works as a reflection-type polarizing film for propagating polarized components of the incident beam. Here, the Y-axis is defined as a propagation axis (or transmission axis). Light that passes through the reflection-type polarizing film acquires a first polarized orientation (or polarized direction).

On the other hand, light that has not passed through the reflection-type polarizing film is the polarized light having a second orientation at right angles with the first polarized orientation. Light that exhibits such a polarized orientation falls on the surface of the film along the X-axis, and is reflected by the action stemming from the difference among the inter-layer refractive indexes. Therefore, the X-axis is defined to be the reflection axis. In such a state, the reflection-type polarizing film permits the transmission of light having a selected polarized orientation (or polarized direction) only.

The optical properties (reflecting property and transmission property) of the reflection-type polarizing film usually vary depending upon the optical thicknesses of the polymer layers constituting the film. If these polymer layers have optical thicknesses corresponding to a plurality of wavelengths of the beams or, in other words, have optical thicknesses expressed by such wavelengths, the optical characteristics effectively respond in their specific bands (wavelength bands). If these layers have optical thicknesses smaller than the wavelength of light, then, the structural interference can be utilized in the selected wavelength for improving optical performance of the reflection-type polarizing film.

In the practice of the present invention, uniform layers can be formed having optical thicknesses smaller than the wavelength of light of a visible spectrum. The structural interference occurs when the thickness of the pair of layers A and B is larger than one-half the wavelength of the incident light (A + B > λ/2). The half wavelength condition gives rise to the occurrence of structural interference of a narrow band in a predetermined wavelength. By laminating or coupling a plurality of polymer laminates having narrow bands, it is allowed to obtain optical performance over a wide band. For example, a first group of polymer layers having an equal thickness (A + B = λ/2) can be laminated on a second group of polymer layers having a different thickness (A + B = λ/2). Usually, hundreds of polymer layers (--- ABAB ---) are integrally laminated or coupled to effectively obtain a response over a wide band. It is desired that the reflection-type polarizing film is so designed as to reflect light at any angle of incidence and of any wavelength.

It is usually desired that the reflection factor of the reflection-type polarizing film is smaller than 20%, more preferably, smaller than 10% and, most preferably, smaller than 5% with respect to light linearly polarized in a direction in parallel with the Y-axis. The reflection factor is an average value in a desired wavelength region and in a region of desired angles of incidence in a specific use or in a general use. It is desired that the reflection factor of the reflection-type polarizing film at a desired maximum angle of incidence is not smaller than 30% and, more desirably, not smaller than 60% with respect to light linearly polarized along the X-axis.

In the dielectric reflecting film used as the totally reflecting mirrors, on the other hand, the refractive index differs in all directions (axes) in the plane of the film. Accordingly, the film does not usually exhibit the polarizing effect. It is desired that the layers of the polymer A and the layers of the polymer B included in the totally reflecting mirror have substantially isotropic optical properties in the in-plane direction of the film and, particularly preferably, exhibit substantially the same refractive index as measured along the X-axis and the Y-axis. For example, when the layers of the polymer A and the layers of the polymer B are used, the layers of the polymer B are combined with the layers of the polymer A having a refractive index different from that of the layers of the polymer B. In this case, it is desired that the two polymer layers are substantially undrawn or are biaxially drawn. Usually, it is desired that the reflection factor of the totally reflecting film is not smaller than 30% and, more preferably, not smaller than 60% at a desired maximum angle of incidence.

The dielectric reflecting film is obtained by preparing a web which alternatingly includes the above-mentioned polymer layers like --- ABAB --- according to an ordinary method of preparing multi-layer films, followed by drawing. As required, furthermore, a third polymer, a fourth polymer, ---, may be used in addition to the first polymer A and the second polymer B, to thereby prepare a polarizing film including these polymer layers. When three or more kinds of polymers are used in combination, the order of laminating the polymer layers may be variously changed depending upon a desired effect and the like.

Concrete examples of the polymers that can be suitably used for forming the dielectric reflecting film include isomers of a polyethylene naphthalate (PEN) such as 2,6-, 1,4-, 1,5-, 2.7- and 2,3-PENs; polyalkylene terephthalates such as polyethylene terephthalate, polybutylene terephthalate and poly-1,4-cyclohexanedimethylene terephthalate; polyimides such as polyacrylimides and polyetherimides; polystyrene such as atactic polystyrene; polycarbonates; polymethacrylates such as polyisobutyl methacrylate, polypropyl methacrylate, polyethyl methacrylate, polymethyl methacrylate; polyacrylates such as polybutyl acrylate, polymethyl acrylate; cellulose derivatives such as ethyl cellulose, cellulose acetate, cellulose propionate. cellulose acetate butylate. cellulose nitrate; polyalkylene polymers such as polyethylene propylene, polybutylene, polyisobutylene, poly(4-methylpentene); fluorinated polymers such as perfluoroalkoxy resin, polytetrafluoroethylene, fluorinated ethylene/propylene copolymer, vinylidene polyfluoride, polychlorotrifluoroethylene; chlorinated polymers such as polyvinylidene chloride, polyvinyl chloride; polysulfones; polyether sulfones; polyacrylonitrile; polyamides: silicone resin; epoxy resin; polyvinyl acetate; polyether amides; ionomer resin; elastomers such as polybutadiene, polyisoprene, neoprene; polyurethanes; and the like, though the examples are in no way limited thereto only.

As the polymer materials, furthermore, there may be advantageously used a copolymer instead of the above-mentioned polymers or in combination with the polymers. The copolymer that can be used here may be a two-component copolymer, a three-component copolymer or any other copolymer. Preferred examples of the copolymer include:
(1) a copolymer of polyethylene naphthalate (PEN) such as a copolymerized polyester (so-called "copolyester") synthesized from a 2,6-, 1,4-, 1,5-, 2,7- and/or 2,3-naphthalene dicarboxylic acid or an ester of any one of them, two or more acids selected from the group consisting of (a) terephthalic acid or esters thereof, (b) isophthalic acid or esters thereof, (c) phthalic acid or esters thereof, (d) alkane dicarboxylic acid, and (e) cycloalkane dicarboxylic acid (e.g.. cyclohexanedicarboxylic acid), and one or two or more glycols selected from the group consisting of alkane glycols and/or cycloalkane glycols (e.g., cyclohexanedimethanol diols);
(2) a copolymer of polyalkylene terephthalate such as a copolymerized polyester synthesized from two or more acids selected from the group consisting of (a) terephthalic acid or esters thereof, (b) isophthalic acid or esters thereof, (c) phthalic acid or esters thereof, (d) alkanedicarboxylic acid. and (e) cycloalkanedicarboxylic acid (e.g., cyclohexanedicarboxylic acid), one or two or more glycols selected from the group consisting of alkane glycols and/or cycloalkane glycols (e.g., cyclohexanedimethanol diols); and
(3) a copolymer of styrene, such as styrene/buiadiene copolymer, styrene/acrylonitrile copolymer, or the like.

In the dielectric reflecting film, each polymer layer that constitutes the film may contain the above-mentioned polymer or copolymer of a single kind, or may contain two or more kinds of the above-mentioned polymers and/or copolymers in any combination as a blend.

The polymer layers that constitute the dielectric reflecting film may have any thickness that widely vary depending upon the polarizing effect and the reflection factor for the total light beam, but that is usually from about 0.01 to 0.70 µm. When the polymer layers are laminated in many number to form a dielectric reflecting film, furthermore, the polymer layers are laminated in a number as small as possible to enhance the transmission of light and to obtain desired optical characteristics. The number of the polymer layers laminated in the dielectric reflecting film is usually smaller than 5,000 and, preferably, smaller than 1,000 and, particularly preferably, from 100 to 500.

The thickness of the formed dielectric reflecting film can be widely changed depending upon the desired polarizing effect and the number of the polymer layers that are laminated, but is usually from about 0.5 µm to about 0.5 mm.

Furthermore, the polarized light-separating elements and the totally reflecting mirrors in the form of the multi-layer polymer film used in the present invention may contain additives such as ultraviolet ray-absorbing agent, antioxidizing agent, anti-molding agent, rust-preventing agent, hygroscopic agent, coloring agent, phosphorescent material and surfactant so far as they do not impair the effect of the present invention. So far as the effect of the present invention is not impaired, furthermore, the elements may have a light-transmitting protection film or the like film formed on the front surfaces, on the back surfaces, or on both surfaces thereof.

In the polarized light-separating elements and the totally reflecting mirrors in the form of the multi-layer polymer film, each layer is composed of a polymer having a double refraction. Therefore, the linearly polarized beam having a particular direction of polarization can be transmitted through, and the linearly polarized beam at right angles therewith can be reflected. Besides, the polymer does not almost absorb light and suppresses the loss for the linearly polarized light that has transmitted through.

The optical circuit element of the present invention can be provided usually in the form of an optical circulator. By changing the means for applying a magnetic field incorporated therein, furthermore, the optical circulator can be provided in the form of an optical switch. When it is desired to provide the optical circuit element in the form of, for example, a 1:2 or 2:2 optical switch, the electric field application means used in combination therewith is constituted by the yoke of a half-hard magnetic material equipped with a current device capable of changing over the direction of the application current and of reversing the magnetization of the polarizing plane rotating element. Moreover, the 1:2 or 2:2 optical switch can also be realized by using a magnetic field application means made of a yoke of a soft magnetic ferrite equipped with a current device capable of changing over the direction of the application current and of reversing the magnetization of the polarizing plane rotating element. Here, as the half-hard magnetic material or soft magnetic ferrite which constitute the yoke, conventional material can be used. For example, as the soft magnetic ferrite for forming the yoke, there can be preferably used. for example, an Mn-Zn type ferrite. an Ni type ferrite, an Li type ferrite, an Ni-Zn type ferrite and an Li-Zn type ferrite. This is because, these ferrites describe magnetization curves of good square shapes.

In the optical circuit element of the present invention, it is desired that the constituent elements, i.e., the polarized light-separating elements, totally reflecting mirrors, first and second polarizing plane rotating elements are secured together as a unitary structure and, particularly, are joined together with an adhesive. Though there is no particular limitation. the adhesive used here is highly transparent and exhibits excellent intimately adhering force. The adhesive agent that is used here has a light transmission factor of, usually, not smaller than 70%, preferably, not smaller than 80% and, particularly preferably, not smaller than 85%.

As such a highly transparent adhesive agent, there can be preferably used an acrylic adhesive agent having a high degree of transparency and a large intimately adhering force. The acrylic adhesive agent is a polymer obtained from a reaction material containing an acrylate monomer having an alkyl group with 4 to 14 carbon atoms, such as isooctyl acrylate, butyl acrylate or 2-ethylhexyl acrylate, and a (meth)acrylate monomer having a polar group, such as (meth)acrylic acid, carboxylalkyl (meth)acrylate, hydroxyalkyl (meth)acrylate or N,N-dialkyl acrylamide, or a composition containing such a polymer. Here. the word "(meth)acrylic acid" includes acrylic acid and methacrylic acid as is widely known, and, hence, (meth)acrylate is used correspondingly thereto.

The elements are adhered together by using an acrylic adhesive or any other adhesive in a manner of, for example, applying an adhesive to the surface of an element to thereby form an adhesive layer and adhering, with pressure, another element onto the element on which the adhesive layer has been formed. Here. the adhesive layer has a thickness of, usually, from 5 to 100 µm and, preferably, from 10 to 50 µm. The adhesive layer can be formed by applying, onto the element, a coating solution containing the above-mentioned polymer or the polymer composition. After the coating solution containing the reaction material is applied, furthermore, the polymerization may be carried out on the element. Or, the adhesive in the form of a film formed on a separate peeling film may be transferred from the peeling film onto the element. So far as the transparency is not lost, the adhesive agent layer may contain the above-mentioned various additives.

In addition, the optical circuit element of the present invention may be equipped with additional lenses, an optical fiber, a casing and the like as is generally done in this field of technology.

It is desired that the optical circuit element of the present invention is produced by forming the polarized light-separating elements and the totally reflecting mirrors by using the same or different multi-layer polymer films, coupling one of the polarized light-separating elements and one of the totally reflecting mirrors integrally together in a manner opposed to each other and nearly in parallel with each other with a glass plate being interposed therebetween thereby to prepare an integrated optical member. The thus obtained integrated optical member is so cut that the cut surfaces define an angle of nearly 45 degrees with respect to the surfaces of the polarized light-separating elements and to the surfaces of the totally reflecting mirrors.

The thus obtained integrated optical parts in a number of two. at least a piece of the first polarizing plane rotating element and at least a piece of the second polarizing plane rotating element, are combined together in a predetermined order as a unitary structure. Then, the thus obtained integrated product is so cut that the cut surfaces define an angle of nearly 45 degrees with respect to the surfaces of the polarized light-separating elements and to the surfaces of the totally reflecting mirrors, thereby to simultaneously prepare a number of the optical circuit elements.

In general, characteristics of the optical circulator are determined by an element having the poorest extinction ratio among the elements constituting the optical circulator. For example, a conventional polarized light-separating element made of the multi-layer dielectric film exhibits inferior extinction ratio to other kinds of the polarizing elements in either the light transmitting property or the light reflecting property. Concretely speaking, such a conventional polarized light-separating element has an extinction ratio of about 25 dB which is very smaller than an extinction ratio of the magnetic garnet that is usually used as an element for constituting the optical circulator. In contrast thereto, the multi-layer polymer film used for the optical circuit element of the present invention realizes an extinction ratio of a level of as high as about 38 dB. When a polarized light-separating element is used to constitute the optical circulator, therefore, there is realized an isolation of as excellent as 38 dB.

Examples of the present invention will now be described in detail with reference to the accompanying drawings. However, it should be noted here that the present invention is in no way limited to the following Examples only. In particular, it should be comprehended that the optical circuit element of the present invention is not only in the form of an optical circulator but also in the form of an optical switch or an optical isolator depending upon the kind of the electric field application means incorporated therein. To simplify the description, furthermore, all kinds of the magnetic field application means used for the diagramed optical circuit elements are not described but some kinds are described.

### Example 1:

Fig. 2 illustrates a preferred Example of a four-terminal optical circulator according to the present invention. The diagramed optical circulator 10 has four terminals (ports), i.e.. a first light incident/outgoing port 1, a second light incident/outgoing port 2, a third light incident/outgoing port 3, and a fourth light incident/outgoing port 4. Though not diagramed, the light incident/outgoing ports are parallel light beam systems constituted by non-spherical lenses and optical fibers. As shown, the optical circulator is constituted by two polarized light-separating elements 5 and 6 formed of a multi-layer polymer film, totally reflecting mirrors 7 and 8 formed of a multi-layer polymer film, a piece of polarizing plane rotating element (first polarizing plane rotating element) 15 independent of the direction of travel of light, a piece of polarizing plane rotating element (second polarizing plane rotating element) 16 dependent of the direction of travel of light, and means (not shown) for applying a magnetic field. Among the constituent elements are interposed glass plates 11, 12, 13, 17, 18 and 19. The constituent elements are joined together with an acrylic adhesive (isooctyl acrylate/acrylic acid copolymer, light transmission factor of about 98%), and are secured integrally together.

In the illustrated four-terminal optical circulator 10, the polarizing plane rotating element 15 is a Faraday rotor composed of a Bi-substituted magnetic garnet (GdBiFe garnet) having a polarizing plane rotating angle of 45 degrees. That is, upon applying a magnetic field, the polarizing plane rotating element 15 turns its polarizing plane by 45 degrees. In the case of this example as shown, a magnetic field H is applied along a direction in which light travels. The polarizing plane rotating element 16 is a quartz crystal one-half wavelength plate and has an optical axis inclined at an angle of 22.5 degrees with respect to the direction of polarization of light that has passed through the polarized light-separating element composed of the multi-layer polymer film. The multi-layer polymer film constituting the polarized light-separating elements and the totally reflecting mirrors, is formed by alternatingly laminating the polymer films having different refractive indexes one upon the other maintaining predetermined thicknesses. The elements are capable of transmitting light having the same direction of polarization. The means for applying a magnetic field is a magnet capable of changing the direction of application of the magnetic field.

In the illustrated optical circulator, the optical element unit has a size which is as very compact as 4 mm x 4.6 mm x 2 mm. Besides, the optical element unit is produced at a cost which is less by about 40% than that of when the multi-layer dielectric film is used for forming the polarized light-separating elements and the totally reflecting mirrors. The optical circulator itself can be easily and correctly produced.

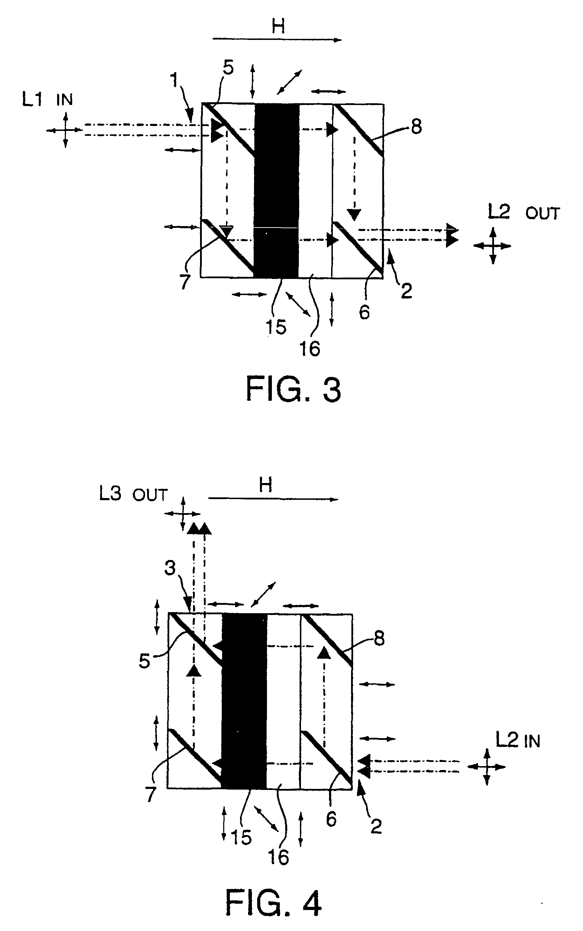

The light traveling passages and the operation of the polarizing plane in the diagramed optical circulator 10, can be comprehended from the side views of Figs. 3 to 6.

Referring to Fig. 3, transmission light L1_{IN} incident on the first light incident/outgoing port 1 is separated as it passes through the polarized light-separating element 5 into two polarized components that meet at right angles with each other. The polarized components pass through different passages in the optical circulator and are synthesized again through another polarized light-separating element 6. After the polarization, separation and synthesis, the synthesized beam goes out as an outgoing beam L2_{OUT} from the second light incident/outgoing port 2.

Referring to Fig. 4, transmission light L2_{IN} incident on the second light incident/outgoing port 2 is separated as it passes through the polarized light-separating element 6 into two polarized components that meet at right angles with each other. The polarized components pass through different passages in the optical circulator and are synthesized again through another polarized light-separating element 5. After the polarization, separation and synthesis, the synthesized beam goes out as an outgoing beam L3_{OUT} from the third light incident/outgoing port 3.

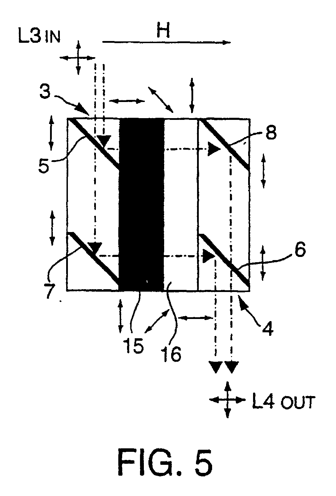

Referring to Fig. 5. transmission light L3_{IN} incident on the third light incident/outgoing port 3 is separated as it passes through the polarized light-separating element 5 into two polarized components that meet at right angles with each other. The polarized components pass through different passages in the optical circulator and are synthesized again through another polarized light-separating element 6. After the polarization. separation and synthesis, the synthesized beam goes out as an outgoing beam L4_{OUT} from the fourth light incident/outgoing port 4.

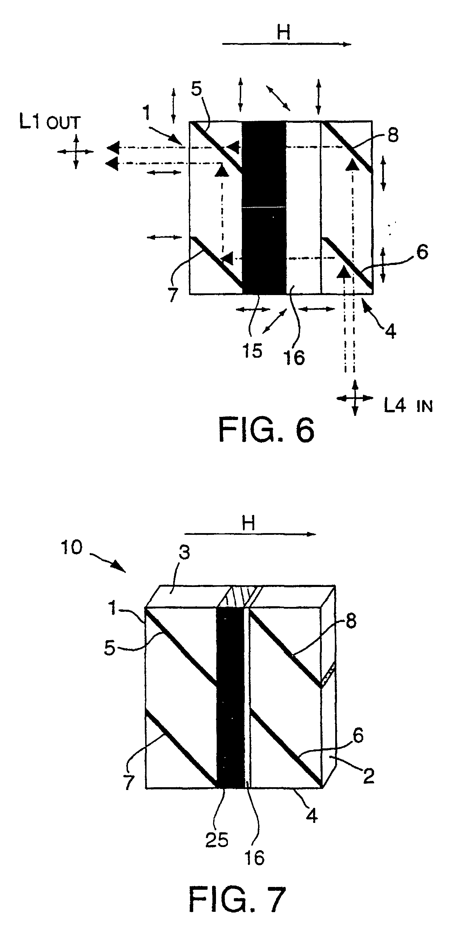

Referring to Fig. 6, furthermore, transmission light L4_{IN} incident on the fourth light incident/outgoing port 4 is separated as it passes through the polarized light-separating element 6 into two polarized components that meet at right angles with each other. The polarized components pass through different passages in the optical circulator and are synthesized again through another polarized light-separating element 5. After the polarization, separation and synthesis, the synthesized beam goes out as an outgoing beam L1_{OUT} from the first light incident/outgoing port 1.

In the illustrated optical circulator 10, the polarized components separated in the optical circulator are synthesized again to go out from the same incident/outgoing port. In this Example, a parallel beam having a diameter of 1.0 mm is used as an incident/outgoing beam to solve the problem of optical damage to the multi-layer polymer film.

The optical circulator 10 described above in detail can be further modified in various ways without departing from the scope of the invention. When the direction of applying the magnetic field is changed into a direction opposite to the arrow H in the drawing, the passage of transmission light of first light incident/outgoing port 1 → second light incident/outgoing port 2 can be changed like first light incident/outgoing port 1 → fourth light incident/outgoing port 4. Therefore, there is provided an optical switch by directly using the constitution of the optical circulator. When the four light incident/outgoing ports of the optical circulator 10 are limited to the two ports, i.e., first light incident/outgoing port 1 and second light incident/outgoing port 2, there is provided an optical isolator with a fiber independent of the polarization. When the four light incident/outgoing ports are limited to the three ports, i.e., first light incident/outgoing port 1, second light incident/outgoing port 2 and third light incident/outgoing port 3, there is provided a three-terminal optical circulator.

### Example 2:

Fig. 7 illustrates another preferred Example of the four-terminal optical circulator according to the present invention. From the standpoint of the arrangement and operations of the optical parts, the diagramed optical circulator 10 is the same as the optical circulator described in the above Example 1 with the exception of using a Faraday rotor composed of a magnetic garnet having a square hysteresis curve instead of the Faraday rotor composed of the Bi-substituted magnetic garnet (GdBiFe garnet) used in Example 1 as the polarizing plane rotating element (first polarizing plane rotating element) 25 independent of the direction of travel of light. The magnetic garnet having the square hysteresis curve used here is a Bi-substituted rare earth Fe garnet, Eu_{0.9}Ho_{1.1}Bi_{1.0}Fe_{4.2}Ga_{0.8}O₁₂ having a thickness of about 0.1 mm which, after once magnetized by applying an external magnetic field, maintains the magnetization of about 350 Oe even after the external magnetic field is no longer applied.

In the optical circulator 10 of this Example, the Faraday rotor used as the first polarizing plane rotating element is magnetized when a sufficiently intense magnetic field is applied thereto from the external side and is saturated even after the magnetic field is no longer applied. In the case of this optical circulator 10, therefore, no means is required for applying the magnetic field to the Faraday rotor, and the device is realized in a further decreased size and at a decreased cost. Furthermore, the optical circulators can be produced batchwisely at a decreased cost.

As will be understood from the foregoing detailed description, furthermore, the obtained optical circulator can be operated as an optical switch, an optical isolator or the like, as required.

### Example 3:

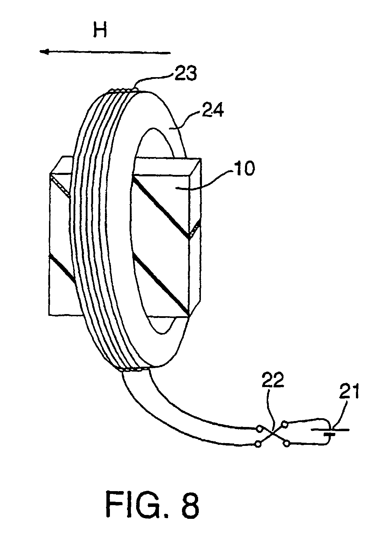

Fig. 8 illustrates an Example of when the four-terminal optical circulator of the present invention described with reference to Fig. 2 is used as an optical switch. In the diagramed Example, a yoke (magnet) 24 made of a half-hard magnetic material on which a coil 23 is wound is used as means for applying a magnetic field, and a DC power source 21 is used as a current device that is connected to the coil 23 through a switch 22. When the optical circulator 10 is arranged in space at the center of the ring-like yoke 24 and the direction of the application current is changed over by the current device, it is allowed to reverse the magnetization of the polarizing plane rotating element independent of the direction of travel of light in the optical circulator. Accordingly, the optical circulator 10 can be operated as a four-terminal (2:2) optical switch. As a modified example, the 2:2 optical switch can be operated as a 1:2 optical switch. In this optical switch, the mechanism for driving the device is arranged on the outer side of the optical element unit, making it possible to decrease the size compared to the conventional optical switch using a coil. In the thus produced optical switch, furthermore, the magnet maintains the magnetic field even after the current has no longer been supplied from the current device; i.e., the optical switch of the self-holding type is realized.

According to the findings of the present inventors, furthermore, it is desired to use a Faraday rotor composed of a Bi-substituted rare earth Fe garnet having a small saturation magnetization, e.g., a GdBi Fe garnet as the polarizing plane rotating element independent of the direction of travel of light. This is because, such a garnet has a saturation magnetic field of 250 gausses and, when used in the present invention, makes it possible to decrease the application current when the magnetic field is changed over by the magnetic field application means.

### Example 4:

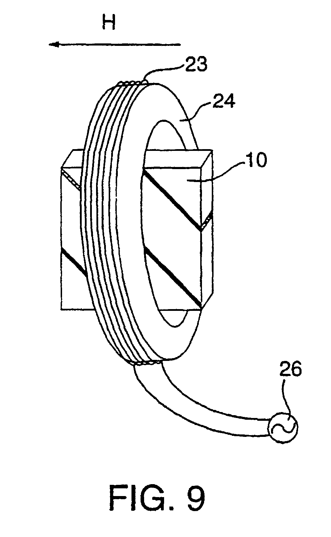

Fig. 9 illustrates another Example of when the four-terminal optical circulator of the present invention described with reference to Fig. 2 is used as an optical switch. In the diagramed Example, a yoke (magnet) 24 made of a soft magnetic ferrite on which a coil 23 is wound is used as means for applying a magnetic field, and an AC power source 26 is used as a current device that is connected to the coil 23. When the optical circulator 10 is arranged in space at the center of the ring-like yoke 24 and the direction of the application current is changed over by the current device, it is allowed to reverse the magnetization of the polarizing plane rotating element independent of the direction of travel of light in the optical circulator. Accordingly, the optical circulator 10 can be operated as a four-terminal (2:2) optical switch. As a modified example, the 2:2 optical switch can be operated as a 1:2 optical switch. In this optical switch, use of the yoke made of a soft magnetic ferrite makes it possible to increase the switching speed. In the thus produced optical switch, furthermore, the magnet maintains the magnetic field even after the current has no longer been supplied from the current device: i.e., the optical switch of the self-holding type is realized.

According to the findings of the present inventors, furthermore, it is desired to use, as a soft magnetic ferrite, the above-mentioned material having a magnetization curve of a good square shape, such as an Mn-Zn type ferrite. By using these materials as a yoke, the switching is realized over a wide range of from a direct current through up to about 100 MHz.

### Example 5:

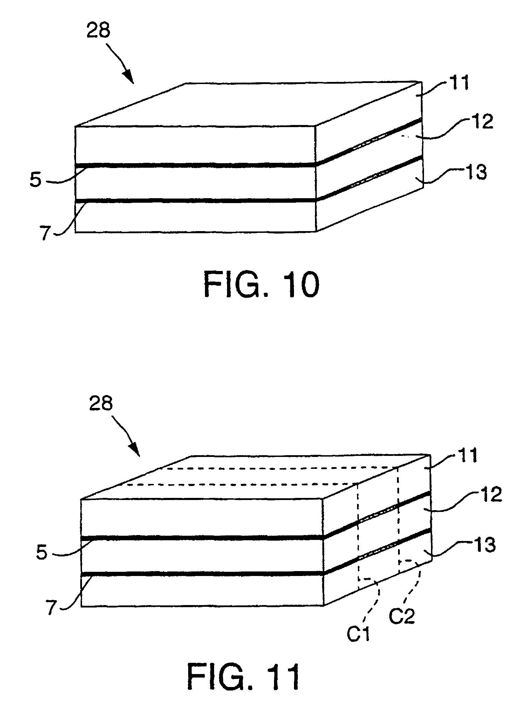

Figs. 10 to 15 illustrate the steps for producing an integrated optical part used for producing the optical circulator of the present invention shown in Fig. 2.

Prior to conducting the steps of production that are shown, the members for constituting the optical circulator are prepared. The polarized light-separating elements and the totally reflecting mirrors are prepared from the multi-layer polymer film according to the above-mentioned method. Unlike the multi-layer dielectric film, the multi-layer polymer film can be easily produced in a large size of the order of square meters. In this Example, too, the polarized light-separating elements and the totally reflecting mirrors are prepared in a size of 30 cm wide and 30 cm long. An optical glass plate is also prepared having a size of 30 cm wide, 30 cm long and cm high. Like the multi-layer polymer film, the glass plate, too, can be easily prepared in a large size of the order of square meters.

First, as shown in Fig. 10, a polarized light-separating element 5 composed of a multi-layer polymer film and a totally reflecting mirror 7 composed of a multi-layer polymer film are sandwiched among the three pieces of optical glass plates 11, 12 and 13, and are joined together with an adhesive. In this Example, the members are integrated together by using a visible light-curable adhesive that has a small contraction coefficient upon curing and that does not adversely affect the multi-layer polymer film, i.e., by using an acrylic adhesive (isooctyl acrylate/acrylic acid copolymer, a light transmission factor of about 98%). There is obtained an integrated optical member 28 of a rectangular shape (30 cm wide and 30 cm long).

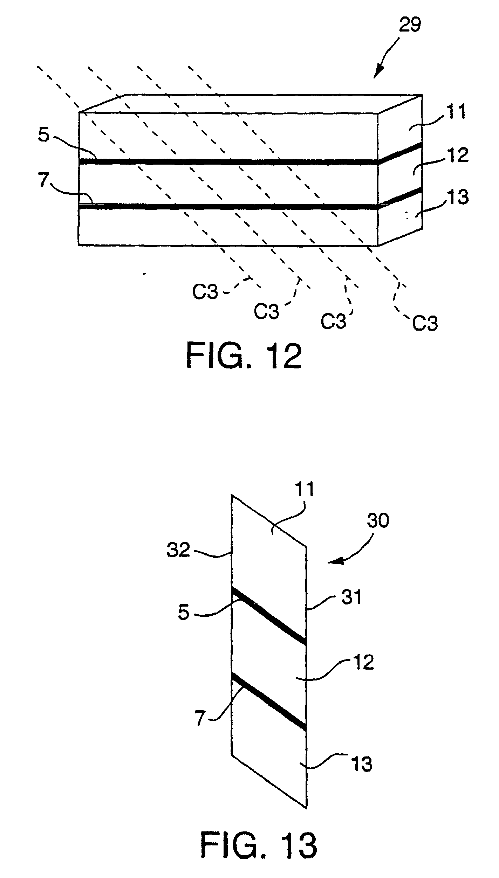

The integrated optical member 28 that is prepared is then cut in the lengthwise direction along the cutting lines C1 and C2 as shown in Fig. 11 in order to prepare integrated optical parts for producing the optical circulators. For easy comprehension, Fig. 11 shows only two cutting lines. In practice, however, there are many cutting lines spaced apart by about 1.1 cm. In this Example, the integrated optical member 28 is cut maintaining a gap of about 1.1 cm. This is because, the magnetic garnet used as an optical part in the production of an optical circuit element such as optical circulator, optical switch or the like, usually, has a size of about 1.1 cm x 1.1 cm. When consideration is given to the handling in the subsequent working steps, therefore, it is desired that the integrated optical member that is cut has a width of about 1.1 cm. There is obtained a precursor 29 (1.1 cm wide and 30 cm long) for the integrated optical part shown in Fig. 12.

Then, the thus obtained precursor 29 for the integrated optical part is cut maintaining a gap of 2 mm, so that the angle of the cut surfaces is about 45 degrees with respect to the polarized light-separating element and to the totally reflecting mirror 7 as represented by cutting lines C3 (only some of them are shown for easy illustration) in Fig. 12. There are obtained a total of 90 integrated optical parts 30 as shown in Fig. 13.

Then, the two opposing surfaces 31 and 32 of the integrated optical part 30 obtained above are optically polished, i.e., relatively coarse surfaces cut along the cutting lines C3 explained with reference to Fig. 12 are optically polished (see Fig. 13). Then, a to-the-air AR coating (reflection-preventing film)(not shown) is applied onto the optically polished surfaces 31 and 32 of the integrated optical part 30.

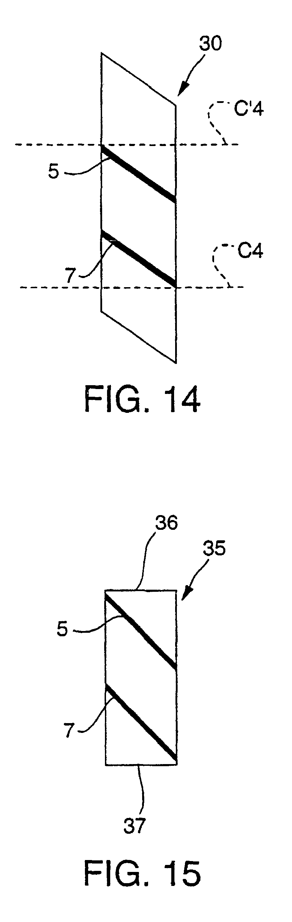

Subsequent to the above step, the thus obtained precursor 30 for the integrated optical part is cut so that the angle of the cut surfaces is about 45 degrees with respect to the polarized light-separating element 5 and to the totally reflecting mirror 7 as represented by cutting lines C4 in Fig. 14. There are obtained integrated optical parts 35 as shown in Fig. 15.

Then, the two opposing surfaces 36 and 37 of the integrated optical part 35 obtained above are optically polished, i.e., relatively coarse surfaces cut along the cutting lines C4 explained with reference to Fig. 14 are optically polished (see Fig. 15). Then, a to-the-air AR coating (reflection-preventing film) (not shown) is applied onto the optically polished surfaces 36 and 37 of the integrated optical part 35. Note that the optical polishing step for the two opposed surfaces 31 and 32 of the integrated optical part 35, illustrated in Fig. 13, may be simultaneously carried out at this timing.

Through the above-mentioned series of simple production steps, the integrated optical parts used for the production of the optical circulators of the invention shown in Fig. 2 are produced in large quantities at one time. As will be understood from the foregoing detailed description, furthermore, the obtained integrated optical parts are advantageously used not only for the production of the optical circulators but also for the production of optical switches. optical isolators and other optical circuit elements.

### Example 6:

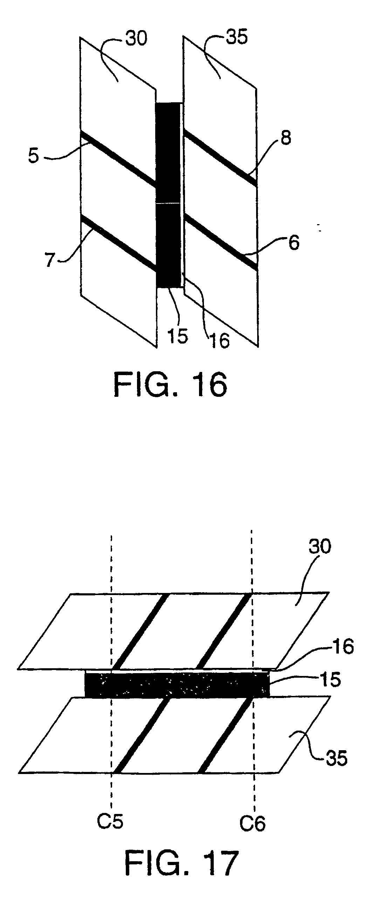

Figs. 16 to 19 illustrate the steps for producing the optical circulator of the present invention shown in Fig. 2 by using the integrated optical part prepared according to the above-mentioned Example 5.

Referring to Fig. 16, the integrated optical parts 30 and 35 are integrally bonded together sandwiching a Faraday rotor 15 and a one-half wavelength plate 16 therebetween. In order to integrate the individual members, the acrylic adhesive is used in the same manner as in Example 5. In the obtained integrated product, the polarized light-separating element and the totally reflecting mirror in each integrated optical part are so arranged that the same elements are located at the diagonal positions. If described in connection with the integrated product, the integrated optical parts simultaneously cut through the cutting step described above with reference to Fig. 12 are so arranged that the cut surfaces of the optical parts are located on the same plane. In the obtained integrated product, therefore, the two polarized light-separating elements transmit or reflect the same polarized beam. Furthermore, the magnetic garnet used as a Faraday rotor must be coated with a to-the-adhesive AR coating, though not diagramed.

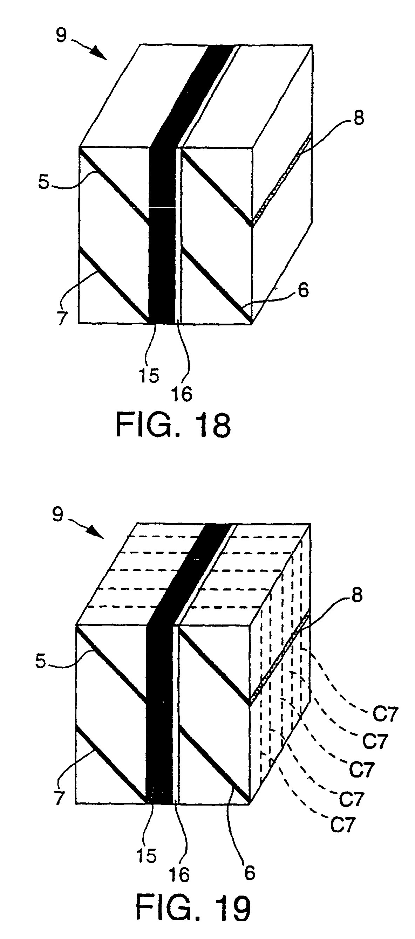

Next, the obtained integrated product is cut and removed at both ends along the cutting lines C5 and C6 in Fig. 17. In this cutting step, too, the cut surfaces define an angle of about 45 degrees with respect to the polarized light-separating element 5 or 6 and the totally reflecting mirror 7 or 8 like in the cutting step described in Example 5. Furthermore, the cut surfaces are optically polished like in the above-mentioned Example 5, and the to-the-air AR coating is applied to all four surfaces of the integrated product that has been optically polished. It is further allowable to use a glass plate having a to-the-air AR coating on one surface thereof to substitute for the to-the-air AR coating. There is obtained a precursor 9 for an optical circulator shown in a perspective view of Fig. 18.

Then. the thus obtained precursor 9 for the optical circulator is cut along a plurality of cutting lines C7 as shown in Fig. 19. Here, the gap between a cutting line C7 and a neighboring cutting line C7, i.e., the gap between the cutting lines, corresponds to a desired depth of the optical circulator. Through such a series of production steps, there are obtained the optical circulators having the shape and size as shown in Fig. 2.

According to this Example as will be understood from the foregoing description, the optical circulators of the present invention are produced through a simple method and in a large quantity at one time and at a decreased cost. As required, furthermore, the thus produced optical circulator can be operated as an optical switch or an optical isolator.

### Example 7:

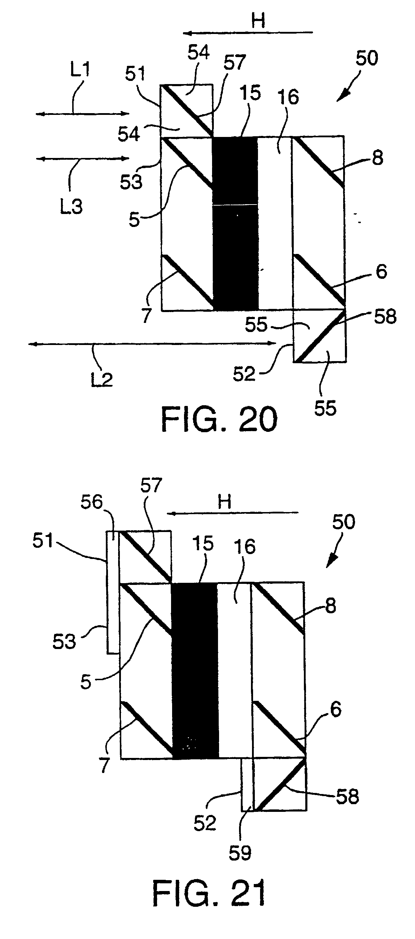

Fig. 20 is a side view illustrating another preferred Example of the optical circulator according to the present invention. The optical circulator 50 shown here is basically the same as the optical circulator 10 described with reference to Fig. 2. In the case of this Example, however, the light incident/outgoing ports consist of a total of three terminals, i.e., a first light incident/outgoing port 51, a second light incident/outgoing port 52 and a third light incident/outgoing port 53 instead of the total of four terminals of from the first to fourth light incident/outgoing ports. The first light incident/outgoing port 51 is provided with a totally reflecting mirror 57 sandwiched by the glass plates 54, and the second light incident/outgoing port 52 is provided with a totally reflecting mirror 58 sandwiched by the glass plates 55. In the drawing, symbols L1, L2 and L3 denote the passages of light that is incident and is going out. In all light incident/outgoing ports, the to-the-adhesive AR coating is applied to the light incident/outgoing surfaces, though not diagramed.

In the diagramcd optical circulator 10. all light incident/outgoing ports exist in one plane, making it possible to save space when it is practically used to form a system. In this Example, furthermore, it is desired that the magnetic field is applied in a direction opposite to that of the case of the optical circulator described with reference to Fig. 2. As required, furthermore, the optical circulator can be operated as an optical switch or an optical isolator.

### Example 8:

Fig. 21 is a side view illustrating a modified Example of the optical circulator of the present invention described with reference to Fig. 20. In the diagramed optical circulator 50, the light incident/outgoing surfaces of the three light incident/outgoing ports, i.e., first light incident/outgoing port 51, second light incident/outgoing port 52 and third light incident/outgoing point 53, are fitted with glass plates 56 (commonly for the ports 51 and 53) and 59 (for the port 52) having the to-the-air AR coating applied on one surface thereof, instead of the to-the-adhesive AR coating.

Use of the glass plate having the to-the-air AR coating instead of the to-the-adhesive AR coating, is effective in preventing the properties from being deteriorated. This is because, when an adhesive is used for adhering the members for preparing an integrated optical member by integrally coupling polarized light-separating elements made of a multi-layer polymer film, totally reflecting mirrors made of a multi-layer polymer film, and a glass plate, the adhesive must be capable of withstanding high temperatures. Otherwise, the adhesive layer becomes defective in a step of directly applying the to-the-adhesive AR coating, and the obtained optical circulator may lose properties. In addition, the multi-layer polymer film constituting the polarized light-separating elements and the totally reflecting mirrors, may lose properties being affected by high temperatures. In contrast thereto, the glass plate with the to-the-air AR coating can be attached to the optical element unit in the final stage in the production of the optical circulator, and does not permit the properties to be deteriorated that will be caused by high temperatures.

If further described, improvement stemming from the use of the glass plate with the to-the-air AR coating, instead of the to-the-adhesive AR coating, can be accomplished in the aforementioned Examples 1 to 6, too.

According to the present invention as described above, there is provided an optical circuit clement having an excellent extinction ratio. Besides, this optical circuit element can be provided in the form of an optical circulator or an optical switch depending upon the selection of a magnetic field application means incorporated therein. According to the present invention, furthermore, use of the polarized light-separating elements and the totally reflecting mirrors formed of the multi-layer polymer film makes it possible to produce the optical circuit elements in large quantities through an easy and simple production method and at a decreased cost.

## Claims

1. An optical circuit element (10) comprising two polarized light-separating elements (5, 6), two totally reflecting mirrors (7, 8), at least a piece of polarizing plane rotating element (15) independent of a direction of travel of light, at least a piece of polarizing plane rotating element (16) dependent of a direction of travel of light, a plurality of light incident/outgoing ports (1, 2, 3, 4), and a magnetic field application means; wherein,
said polarized light-separating elements and said totally reflecting mirrors are formed of the same or different multi-layer films **characterised in that** said films are made of polymer.

2. An optical circuit element according to claim 1, wherein said polarizing plane rotating element independent of a direction of travel of light is a Faraday rotor (15).

3. An optical circuit element according to claim 2, wherein said Faraday rotor comprises a magnetic garnet having a square hysteresis curve.

4. An optical circuit element according to any one of claims 1 to 3, wherein said optical circuit element is an optical circulator (50).

5. An optical circuit element according to any one of claims 1 to 3, wherein said optical circuit element is an optical switch.

6. An optical circuit element according to claim 5, wherein said optical switch is a 1:2 optical switch or a 2:2 optical switch and, in this case, said magnetic field application means comprises a yoke made of a half-hard magnetic material equipped with a current device capable of changing over the direction of an applied current and of reversing the magnetization of said polarizing plane rotating element.

7. An optical circuit element according to claim 5, wherein said optical switch is a 1:2 optical switch or a 2:2 optical switch and, in this case, said magnetic field application means comprises a yoke (24) made of a soft magnetic ferrite equipped with a current device (21) capable of changing over the direction of an applied current and of reversing the magnetization of said polarizing plane rotating element.

8. An optical circuit element according to any one of claims 1 to 7, wherein one of said polarized light-separating elements and one of said totally reflecting mirrors are opposed to each other via a glass plate (12) interposed therebetween, and are coupled integrally together nearly in parallel with each other.

9. An optical circuit element according to claim 8, wherein said polarized light-separating elements, said totally reflecting mirrors and said glass plate are joined together with an adhesive.

10. A method of producing an optical circuit element comprising, in combination, two polarized light-separating elements, two totally reflecting mirrors, at least a piece of polarizing plane rotating element independent of a direction of travel of light, at least a piece of polarizing plane rotating element dependent of a direction of travel of light, a plurality of light incident/outgoing ports, and a magnetic field application means; wherein,
said polarized light-separating elements and said totally reflecting mirrors are formcd of the same or different multi-layer polymer films;
one of said polarized light-separating elements and one of said totally reflecting mirrors are opposed to each other via a glass plate interposed therebetween, and are coupled integrally together nearly in parallel with each other;
the obtained integrated optical member is so cut that the cut surfaces maintain an angle of nearly 45 degrees with respect to the surfaces of said polarized light-separating elements and to the surfaces of said totally reflecting mirrors; and
the integrated optical member after cut is combined together with said polarizing plane rotating element independent of the direction of travel of light and said polarizing plane rotating element dependent of the direction of travel of light, thereby to form an integrated optical part.

11. A method of producing an optical circuit element according to claim 10, wherein said integrated optical members in a number of two. said polarizing plane rotating element independent of the direction of travel of light and said polarizing plane rotating element dependent of the direction of travel of light, are combined together to form a precursor of the integrated optical part, and the thus obtained precursor is so cut that the cut surfaces maintain an angle of nearly 45 degrees with respect to the surfaces of said polarized light-separating elements and to the surfaces of said totally reflecting mirrors in order to simultaneously form a number of the integrated optical parts.

## Patentansprüche

1. Optisches Schaltungselement (10) mit zwei polarisierten Lichttrennelementen (5, 6), zwei total reflektierenden Spiegeln (7, 8), wenigstens einem Teil eines Polarisierungsebenenrotationselements (15), das von der Bewegungsrichtung des Lichts unabhängig ist, wenigstens einem Teil eines Polarisierungsebenenrotationselements (16), das von der Bewegungsrichtung des Lichts abhängig ist, mehreren Lichteingangs-/ausgangsports (1, 2, 3, 4) und einer Magnetfeldanlegeeinrichtung; wobei
die polarisierten Lichttrennelemente und die total reflektierenden Spiegel aus den selben oder unterschiedlichen mehrschichtigen Filmen gebildet sind, **dadurch gekennzeichnet, daß** die Filme aus Polymer bestehen.

2. Optisches Schaltungselement nach Anspruch 1, bei dem das von der Bewegungsrichtung des Lichts unabhängige Polarisierungsebenenrotationselement ein Faraday-Rotor (15) ist.

3. Optisches Schaltungselement nach Anspruch 2, bei dem der Faraday-Rotor einen magnetischen Granat mit einer quadratischen Hysteresekurve aufweist.

4. Optisches Schaltungselement nach einem der Ansprüche 1 bis 3, bei dem das optische Schaltungselement ein optischer Zirkulator (50) ist.

5. Optisches Schaltungselement nach einem der Ansprüche 1 bis 3, bei dem das optische Schaltungselement ein optischer Schalter ist.

6. Optisches Schaltungselement nach Anspruch 5, bei dem der optische Schalter ein optischer 1:2-Schalter oder ein optischer 2:2-Schalter ist und in diesem Fall die Magnetfeldanlegeeinrichtung ein Joch aus halbhartem Magnetmaterial aufweist, das mit einer Stromvorrichtung versehen ist, welche in der Lager ist, die Richtung eines angelegten Stroms zu ändern und die Magnetisierung des Polarisationsebenenrotationselements umzukehren.

7. Optisches Schaltungselement nach Anspruch 5, bei dem der optische Schalter ein optischer 1:2-Schalter oder ein optischer 2:2-Schalter ist und in diesem Fall die Magnetfeldanlegeeinrichtung ein Joch (24) aus weichmagnetischem Ferrit aufweist, das mit einer Stromvorrichtung (21) versehen ist, welche in der Lager ist, die Richtung eines angelegten Stroms zu ändern und die Magnetisierung des Polarisationsebenenrotationselements umzukehren.

8. Optisches Schaltungselement nach einem der Ansprüche 1 bis 7, bei dem eines der polarisierten Lichttrennelemente und einer der total reflektierenden Spiegel einander durch eine zwischen diesen angeordnete Glasplatte (12) gegenüberliegen und nahezu parallel zueinander einstückig miteinander verbunden sind.

9. Optisches Schaltungselement nach Anspruch 8, bei dem die polarisierenden Lichttrennelemente, die total reflektierenden Spiegel und die Glasplatte durch einen Kleber miteinander verbunden sind.

10. Verfahren zum Herstellen eines optischen Schaltungselements mit, in Kombination, zwei polarisierten Lichttrennelementen, zwei total reflektierenden Spiegeln, wenigstens einem Teil eines Polarisierungsebenenrotationselements, das von der Bewegungsrichtung des Lichts unabhängig ist, wenigstens einem Teil eines Polarisierungsebenenrotationselements, das von der Bewegungsrichtung des Lichts abhängig ist, mehreren Lichteingangs-/-ausgangsports und einer Magnetfeldanlegeeinrichtung; wobei
die polarisierten Lichttrennelemente und die total reflektierenden Spiegel aus den selben oder unterschiedlichen mehrschichtigen Filmen gebildet werden,
eines der polarisierten Lichttrennelemente und einer der total reflektierenden Spiegel einander durch eine zwischen diesen angeordnete Glasplatte gegenüberliegen und nahezu parallel zueinander einstückig miteinander verbunden werden,
das gebildete integriert-optische Teil derart geschnitten wird, daß die Schnittflächen einen Winkel von nahezu 45° zu den Oberflächen der polarisierten Lichttrennelemente und den Oberflächen der total reflektierenden Spiegel aufweisen; und
das integriert-optische Teil nach dem Schneiden mit dem von der Bewegungsrichtung des Lichts unabhängigen Polarisierungsebenenrotationselement und dem von der Bewegungsrichtung des Lichts abhängigen Polarisierungsebenenrotationselement zum Bilden eines integriert-optischen Bauteils kombiniert wird.

11. Verfahren zum Herstellen eines optischen Schaltungselements nach Anspruch 10, bei dem die integriert-optischen Teile zu zweit, das von der Bewegungsrichtung des Lichts unabhängige Polarisierungsebenenrotationselement und das von der Bewegungsrichtung des Lichts abhängige Polarisierungsebenenrotationselement zur Bildung eines Vorläufers des integriert-optischen Bauteils miteinander kombiniert werden, und der derart erhaltene Vorläufer derart geschnitten wird, daß die Schnittflächen einen Winkel von nahezu 45° zu den Oberflächen der polarisierten Lichttrennelemente und den Oberflächen der total reflektierenden Spiegel beibehalten, um gleichzeitig eine Anzahl der integriert-optischen Bauteile zu bilden.

## Revendications

1. Élément de circuit optique (10) comprenant deux éléments séparateurs de lumière polarisée (5, 6), deux miroirs à réflexion totale (7, 8), au moins un morceau d'élément rotatif plan polarisant (15) indépendant de la direction du parcours de la lumière, au moins un morceau d'élément rotatif plan polarisant (16) dépendant de la direction du parcours de la lumière, une pluralité d' orifices d'incidence/de sortie de lumière (1, 2, 3, 4) et un moyen d'application de champ magnétique ; dans lequel
lesdits éléments séparateurs de lumière polarisée et lesdits miroirs à réflexion totale sont formés du même ou de différents films multicouches, **caractérisé en ce que** lesdits films sont faits de polymère.

2. Élément de circuit optique selon la revendication 1, dans lequel ledit élément rotatif plan polarisant indépendant de la direction du parcours de la lumière est un rotor de Faraday (15).

3. Élément de circuit optique selon la revendication 2, dans lequel ledit rotor de Faraday comprend un grenat magnétique ayant une courbe d'hystérésis carrée.

4. Élément de circuit optique selon l'une quelconque des revendications 1 à 3, dans lequel ledit élément de circuit optique est un circulateur optique (50).

5. Élément de circuit optique selon l'une quelconque des revendications 1 à 3, dans lequel ledit élément de circuit optique est un commutateur optique.

6. Élément de circuit optique selon la revendication 5, dans lequel ledit commutateur optique est un commutateur optique 1:2 ou un commutateur optique 2:2 et dans ce cas, ledit moyen d'application de champ magnétique comprend une carcasse faite d'un matériau magnétique demi-durci, équipée d'un dispositif de courant capable de modifier le sens d'un courant appliqué et d'inverser la magnétisation dudit élément rotatif plan polarisant.

7. Élément de circuit optique selon la revendication 5, dans lequel ledit commutateur optique est un commutateur optique 1:2 ou un commutateur optique 2:2 et dans ce cas, ledit moyen d'application de champ magnétique comprend une carcasse (24) faite d'un ferrite magnétique doux, équipée d'un dispositif de courant (21) capable de modifier le sens d'un courant appliqué et d'inverser la magnétisation dudit élément rotatif plan polarisant.

8. Élément de circuit optique selon l'une quelconque des revendications 1 à 7, dans lequel l'un desdits éléments séparateurs de lumière polarisée et l'un desdits miroirs à réflexion totale sont opposés l'un à l'autre par l'intermédiaire d'une plaque en verre (12) intercalée entre eux et sont intégralement couplés ensemble pratiquement en parallèle l'un à l'autre.

9. Élément de circuit optique selon la revendication 8, dans lequel lesdits éléments séparateurs de lumière polarisée, lesdits miroirs à réflexion totale et ladite plaque en verre sont reliés ensemble avec une colle.

10. Procédé de fabrication d'un élément de circuit optique comprenant, en combinaison, deux éléments séparateurs de lumière polarisée, deux miroirs à réflexion totale, au moins un morceau d'élément rotatif plan polarisant indépendant de la direction du parcours de la lumière, au moins un morceau d'élément rotatif plan polarisant dépendant de la direction du parcours de la lumière, une pluralité d'orifices d'incidence/de sortie de lumière et un moyen d'application de champ magnétique ; dans lequel
lesdits éléments séparateurs de lumière polarisée et lesdits miroirs à réflexion totale sont formés du même ou de différents films polymères multicouches ;
l'un desdits éléments séparateurs de lumière polarisée et l'un desdits miroirs à réflexion totale sont opposés l'un à l'autre par l'intermédiaire d'une plaque en verre intercalée entre eux et sont intégralement couplés ensemble pratiquement en parallèle l'un à l'autre ;
l'élément optique intégré obtenu est coupé de telle sorte que les surfaces de coupe maintiennent un angle presque de 45 degrés par rapport aux surfaces desdits éléments séparateurs de lumière polarisée et aux surfaces desdits miroirs à réflexion totale ; et
après la coupe, l'élément optique intégré est combiné avec ledit élément rotatif plan polarisant indépendant de la direction du parcours de la lumière et ledit élément rotatif plan polarisant dépendant de la direction du parcours de la lumière, de façon à former un composant optique intégré.

11. Procédé de fabrication d'un élément de circuit optique selon la revendication 10, dans lequel lesdits éléments optiques intégrés sont au nombre de deux, ledit élément rotatif plan polarisant indépendant de la direction du parcours de la lumière et ledit élément rotatif plan polarisant dépendant de la direction du parcours de la lumière sont combinés ensemble pour former un précurseur du composant optique intégré et le précurseur ainsi obtenu est coupé de telle sorte que les surfaces de coupe maintiennent un angle de presque 45 degrés par rapport aux surfaces desdits éléments séparateurs de lumière polarisée et aux surfaces desdits miroirs à réflexion totale pour former simultanément un certain nombre des composants optiques intégrés.
